# FASCICULE DE BREVET EUROPEEN

(11) **EP 2 598 284 B1**
(45) Date de publication et mention de la délivrance du brevet: **30.04.2014**
(21) Numéro de dépôt: 11735450.6
(22) Date de dépôt: 25.07.2011
(51) Int. Cl.: B24B 5/22, B24B 5/313, B24B 5/35, B24B 41/00, G21C 19/00

(54) **DISPOSITIF POUR L'INTRODUCTION, LE GUIDAGE ET L'EVACUATION DE PIECES CYLINDRIQUES, TELLES QUE DES PASTILLES DE COMBUSTIBLE NUCLEAIRE, DANS UNE RECTIFIEUSE SANS CENTRE**
VORRICHTUNG FÜR DEN EINSATZ, DIE FÜHRUNG UND ENTFERNUNG VON ZYLINDERFÖRMIGEN TEILEN WIE ETWA KERNBRENNSTOFFTABLETTEN BEI EINER SPITZENLOSEN SCHLEIFMASCHINE
DEVICE FOR INSERTING, GUIDING, AND REMOVING CYLINDRICAL PARTS, SUCH AS NUCLEAR FUEL PELLETS, IN A CENTERLESS GRINDER

(30) Priorité: 27.07.2010 FR 1056138
(43) Date de publication de la demande: 05.06.2013
(73) Titulaire: Areva NC, 75009 Paris (FR)
(72) Inventeur: FANTINI, Serge, F-30150 Saint Genies de Comolas (FR); MEDINA, Hervé, F-30150 Saint Genies de Comolas (FR)
(74) Mandataire: Ilgart, Jean-Christophe
(86) Numéro de dépôt international: PCT/EP2011/062748
(87) Numéro de publication internationale: WO 2012/013634

(56) Documents cités:
- EP-A1- 1 834 729
- WO-A1-99/19114
- DE-A1- 3 116 140
- US-A- 3 576 189
- US-A- 4 167 081

## Description

L'invention concerne un dispositif pour l'introduction, le guidage et l'évacuation de pièces cylindriques, telles que des pastilles de combustible nucléaire, dans une rectifieuse sans centre.

Elle vise particulièrement à améliorer la fiabilité de la rectification sans centre.

L'application principale vise la rectification des pastilles de combustible nucléaire dans laquelle la qualité est stricte et impose une certaine exigence pour éviter de générer des défauts sur les pastilles.

### ART ANTÉRIEUR

La rectification sans centre, telle que connue du document DE-A-31 16 140, est un procédé de meulage avantageux connu pour la rectification de pièces cylindriques, en particulier pour les pastilles de combustible nucléaire.

Une rectifieuse sans centre comprend usuellement deux meules dont l'une est une meule d'entraînement, qui sert à la mise en rotation des pastilles sur elles-mêmes en les faisant avancer sur un rail de guidage, appelé règle d'enfilade dans le cas des pastilles de combustible nucléaire, et l'autre est une meule de travail et a pour fonction de rectifier le diamètre des pastilles par abrasion.

La qualité des pastilles de combustible nucléaire rectifiées dépend bien évidemment de l'efficacité de la rectifieuse sans centre proprement dite mais également de la qualité du transfert des pastilles en amont immédiat, dans, et en aval immédiat de la rectifieuse sans centre, c'est-à-dire de l'introduction des pastilles dans la règle d'enfilade, de leur guidage dans la règle d'enfilade entre les meules de travail et d'entraînement et à leur évacuation de celle-ci une fois rectifiées.

Le but général de l'invention est de proposer une solution qui permette d'améliorer encore la qualité du transfert des pièces cylindriques, telles que des pastilles de combustible nucléaire, en amont immédiat, dans et en aval immédiat d'une rectifieuse sans centre.

Un but particulier est de proposer une solution simple à mettre en oeuvre dans un environnement de boîte à gants.

### EXPOSÉ DE L'INVENTION

Pour ce faire, l'invention a pour objet un dispositif pour l'introduction, le guidage et l'évacuation de pièces cylindriques, telles que des pastilles de combustible nucléaire, dans une rectifieuse sans centre, selon la revendication 1.

Selon l'invention, les moyens mécaniques de réglage micrométrique de l'alignement du guide d'entrée sont indépendants de ceux du guide de sortie.

Autrement dit, selon l'invention, on prévoit des moyens de réglage de l'alignement des guides d'entrée et de sortie qui permettent un alignement très précis entre ceux-ci, au micromètre près, et l'espace entre meules de travail et d'entraînement. L'indépendance entre ces deux moyens de réglage permet un réglage encore plus précis. On évite ainsi toute dérive des pièces à rectifier, telles que les pastilles de combustible nucléaire, encore présentes entre les meules.

Ainsi, les pièces (pastilles de combustible) peuvent être introduites en entrée de la rectifieuse sans centre, sans interférence mécanique entre elles.

De même, il y a une continuité dans la ligne de contact des pièces rectifiées avec la meule d'entraînement en sortie de la rectifieuse. On évite ainsi les défauts de rectification liés à une discontinuité de contact comme possible selon l'état de l'art.

De préférence, la règle d'enfilade est une pièce monobloc en acier ayant subi des traitements thermiques de revenu et de trempe en surface et à coeur. Ces traitements peuvent être complétés de préférence par des traitements de surface une fois la pièce (règle) finie afin d'accroître certaines caractéristiques telles qu'un meilleur coefficient de frottement et une plus grande résistance à l'usure. Cet acier est de préférence un acier XC 38.

Les règles d'enfilade selon l'état de l'art pour une application de rectifieuse sans centre de pastilles de combustible nucléaire sont constituées d'une base en acier sur laquelle est rapportée une plaquette en carbure de tungstène qui constitue le rail de guidage proprement dit des pastilles, c'est-à-dire la partie en contact direct avec les pastilles à rectifier. L'avantage d'une plaquette de carbure de tungstène est que celle-ci a une grande résistance à l'usure. L'inconvénient majeur est sa fragilité due aux chocs et aux contraintes internes de la base en acier. Ainsi, en réalisant une règle monobloc en acier avec traitements thermiques à coeur et de surface de façon à avoir une résistance à l'usure équivalente au carbure de tungstène ainsi qu'une bonne résistance aux chocs et une libération des contraintes internes de la règle, on s'affranchit des inconvénients des règles d'enfilade selon l'état de l'art.

Selon un mode de réalisation avantageux, au moins l'un des deux guides est constitué de deux barrettes dont une fixe et parallèle au bord longitudinal de la règle disposée côté meule de travail, et l'autre est montée sur un pivot qui permet de régler l'écartement par rapport au guide fixe en vis-à-vis, l'écartement du guide pivotant étant réalisé par l'actionnement des moyens mécaniques de réglage de l'alignement dudit guide. De préférence, le guide d'entrée et le guide de sortie sont constitués chacun de deux barrettes dont une fixe et parallèle à un bord longitudinal de la règle et l'autre est montée pivotante pour ajuster l'écartement du guide avec le guide fixe en vis à vis.

De préférence encore, l'axe des pivots des guides réglables est muni d'un palier en polymère. Ainsi, on rend compatible l'axe de pivotement avec les poussières et éclats de pastilles issus de la rectification, en évitant par conséquent tout risque de grippage.

Selon une variante de réalisation avantageuse :
- l'axe de pivotement de la barrette pivotante du guide d'entrée et/ou de sortie est (sont) monté(s) dans un support,
- les moyens mécaniques de réglage micrométrique de l'alignement du guide d'entrée par rapport à la règle d'enfilade et/ou ceux de réglage du guide de sortie comprennent une première vis vissée dans le support de l'axe de pivotement et une deuxième vis imbriquée dans la première vis, de moindre pas que celle-ci et adaptée pour venir en appui contre une partie de la barrette pivotante, un vissage de la première vis dans le support provoquant une translation des deux tandis qu'un vissage de la deuxième vis dans la première vis et en appui contre la partie de la barrette pivotante provoque un pivotement de cette dernière.

Pour obtenir la plus grande précision possible, le pas de la deuxième vis est plus faible que celui de la première vis tout en ayant une valeur suffisamment proche du pas de la première vis pour engendrer un réglage micrométrique des barrettes pivotantes. Le dispositif comprend avantageusement un ressort adapté pour rattraper les jeux fonctionnels du dispositif garantissant l'appui permanent entre la deuxième vis et la barrette pivotante.

A des fins de simplicité d'assemblage, chaque support d'axe de pivotement et de vis est fixé à la règle d'enfilade.

Chaque support d'axe de pivotement et de vis est conformé en tourelle avec les deux vis imbriquées l'une dans l'autre et agencées en partie supérieure de tourelle. Grâce à une conformation en tourelle, on peut venir effectuer manuellement les réglages d'alignement par manipulation des vis depuis le dessus. Cela est parfaitement adapté à un environnement de boîte à gants dans laquelle la rectifieuse sans centre est implantée.

La forme géométrique et la longueur du guide de sortie sont de préférence adaptées pour limiter le nombre de pièces cylindriques rectifiées en tampon en sortie des meules. Autrement dit, on évite l'accumulation de pastilles dont certaines pourraient stationner entre les meules et être usinées au delà des tolérances exigées. L'inclinaison du guide de sortie ainsi que la longueur inclinée engendrent l'évacuation des pastilles tout en limitant leur énergie cinétique lors de leur évacuation vers le convoyeur en aval afin qu'elles restent en position horizontale sur celui-ci. En effet, ne pas limiter leur énergie cinétique reviendrait à les faire basculer sur le convoyeur, ce qui nuirait à leur qualité finale.

Le dispositif constitue de préférence un ensemble monobloc auquel sont fixées des poignées adaptées pour permettre son insertion et son retrait d'une rectifieuse sans centre dans une boîte à gants. En retirant manuellement aisément le dispositif, on facilite d'autant les opérations de maintenance de la rectifieuse sans centre.

L'invention concerne également une rectifieuse sans centre, comprenant un dispositif décrit précédemment. Une telle rectifieuse sans centre est adaptée à la rectification de pastilles de combustible nucléaire.

L'invention concerne enfin une boîte à gants dans laquelle est agencée une rectifieuse sans centre comme ci-dessus.

### BRÈVE DESCRIPTION DES DESSINS

D'autres avantages et caractéristiques ressortiront mieux à la lecture de la description détaillée faite ci-dessous en référence aux figures suivantes parmi lesquelles :
- la figure 1 est une vue en perspective du côté du guide d'entrée d'un dispositif selon l'invention en configuration non installée,
- la figure 2 est une autre vue en perspective d'un dispositif selon l'invention en configuration non installée mais du côté du guide de sortie,
- la figure 3 est une vue de côté d'un dispositif selon l'invention en configuration installée dans une rectifieuse sans centre de pastilles de combustible nucléaire,
- les figures 3A et 3B sont des vues de coupe transversale selon respectivement les axes A-A et B-B du dispositif selon la figure 3.

### EXPOSÉ DÉTAILLÉ DE MODES DE RÉALISATION PARTICULIERS

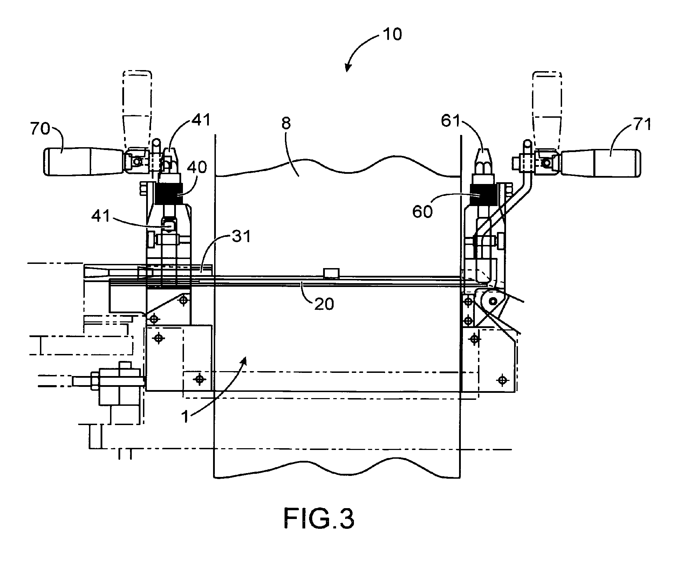

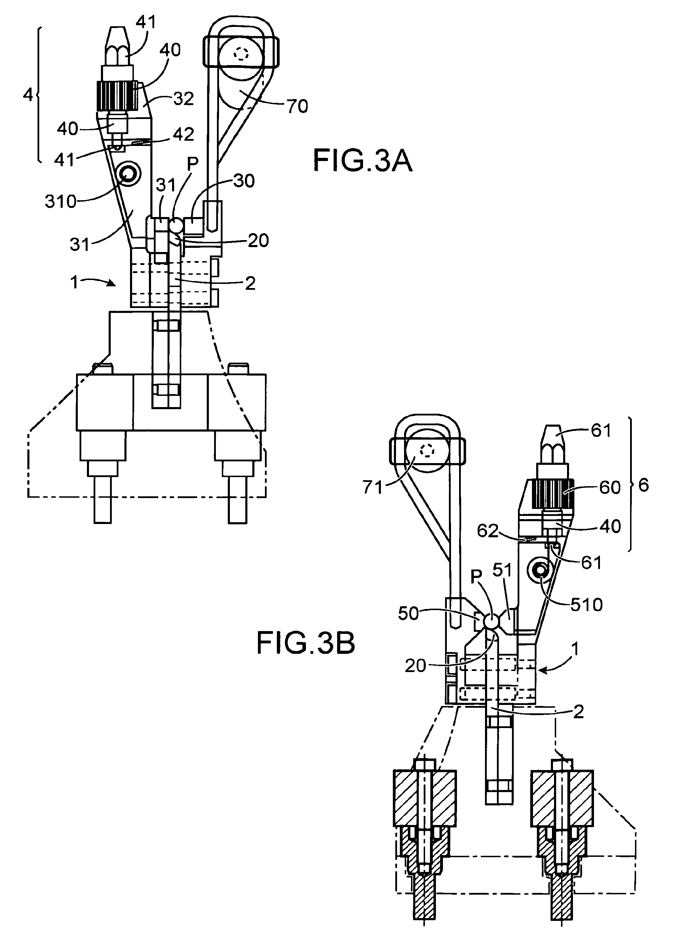

Les termes « inférieur », « supérieur », « en dessous », « au dessus », « en amont » et « en aval » sont à considérer dans la configuration installée du dispositif 1 selon l'invention , c'est-à-dire avec la règle d'enfilade en position horizontale entre la meule de travail et la meule d'entraînement d'une rectifieuse sans centre, tel qu'illustré en figure 3.

Le dispositif 1 selon l'invention comprend tout d'abord une règle d'enfilade 2 adaptée pour permettre le guidage en enfilade de pastilles sur la longueur des meules de travail 8 et d'entraînement (non représentée) d'une rectifieuse sans centre 10 illustrée en figure 3.

La règle d'enfilade 2 est une pièce monobloc en acier XC 38 ayant subi des traitements thermiques de trempe et de recuit en surface et à coeur. Les traitements thermiques ont été réalisés pour conférer à la règle d'enfilade une résistance à l'usure équivalente au carbure de tungstène, une bonne résistance aux chocs et pour que la règle 2 n'ait pas de contraintes internes. Cette règle 2 comprend une partie supérieure 20 dont la fonction proprement dite est le guidage des pastilles P de combustible nucléaire. Comme mieux montré en figures 3A et 3B, la partie de guidage 20 est inclinée et est délimitée par deux bords longitudinaux 200, 201.

Un guide d'entrée 3 est agencé à une extrémité longitudinale de la règle d'enfilade 2 : il est adapté pour permettre l'introduction en enfilade des pastilles P sur la règle 2 depuis un système de convoyage non représenté en amont de la rectifieuse sans centre 10. Ce guide d'entrée 3 comprend une barrette fixe 30 sensiblement alignée sur le bord longitudinal 200 de la règle 2 et une autre barrette 31 montée pivotante pour changer d'inclinaison par rapport à l'autre bord longitudinal 201 de la règle 2.

La barrette 31 est montée pivotante sur un axe 310 muni d'un palier en polymère monté dans un support 32 conformé en tourelle.

Pour régler l'alignement de la barrette pivotante 31 par rapport au bord 201 de la règle, des moyens mécaniques 4 sont prévus. Ces moyens sont constitués de deux vis 40, 41 imbriquées l'une dans l'autre dans la partie supérieure de la tourelle 32 (figure 3A). La première vis 40 est vissée dans le support 32. La deuxième vis 41 a un pas inférieur mais proche de celui de la vis 40 et la vis 41 est immobilisée en rotation. Une rotation de la vis 40 engendre une translation suivant son axe par rapport au support fixe 32 (liaison vis écrou). Dans le même temps, cette rotation de la vis 61 engendre une deuxième translation suivant son axe par rapport à la deuxième vis 41. La différence de pas a pour conséquence une faible translation du point d'appui de la vis 41 sur le guide 31 ce qui produit une rotation de ce dernier. De tels moyens de réglage 4, 40, 41 permettent de réaliser un réglage très précis de l'alignement de la barrette pivotante 31, au micromètre prés.

Un ressort 42 de rattrapage des jeux fonctionnels du dispositif permet d'avoir un appui permanent entre la vis 41 et la barrette 31 en position pivotée.

Avec les caractéristiques de forme et dimensionnelles du guide d'entrée 5 et les réglages de l'alignement de la barrette pivotante qui vient d'être décrits, l'introduction des pastilles P de combustible nucléaire se fait sans aucune interférence mécanique entre elles.

Un guide de sortie 5 est agencé à l'autre extrémité longitudinale de la règle d'enfilade 2 : il est adapté pour permettre le transfert des pastilles P depuis la règle 2 vers un système de convoyage non représenté en aval de la rectifieuse sans centre 10.

Le montage et l'agencement du guide d'entrée 5 avec les moyens de réglage de l'alignement de la barrette pivotante 31 sont réalisés de manière analogue pour le guide de sortie 5, les moyens de réglage 6, 60, 61 de la barrette pivotante 51 du guide de sortie 5 étant indépendants de ceux 4, 40, 41 de la barrette pivotante 31 du guide d'entrée 3.

Ainsi, le guide de sortie 5 comprend une barrette fixe 50 sensiblement alignée sur le bord longitudinal 200 de la règle 2 et une autre barrette 51 montée pivotante pour changer d'inclinaison par rapport à l'autre bord longitudinal 201 de la règle 2.

La barrette 51 est montée pivotante sur un axe 510 muni d'un palier en polymère monté dans un support 52 conformé en tourelle.

Pour régler l'alignement de la barrette pivotante 51 par rapport au bord 201 de la règle, des moyens mécaniques 6 sont prévus. Ces moyens sont constitués de deux vis 60, 61 imbriquées l'une dans l'autre dans la partie supérieure de la tourelle 52 (figure 3B). La première vis 60 est vissée dans le support 52. La deuxième vis 61 a un pas inférieur mais proche de celui de la vis 60 et la vis 61 est immobilisée en rotation. Une rotation de la vis 60 engendre une translation suivant son axe par rapport au support fixe 52 (liaison vis écrou). Dans le même temps, cette rotation de la vis 60 engendre une deuxième translation suivant son axe par rapport à la deuxième vis 61. La différence de pas à pour conséquence une faible translation du point d'appui de la vis 61 sur le guide 51 ce qui produit une rotation de ce dernier. De tels moyens de réglage 6, 60, 61 permettent de réaliser un réglage très précis de l'alignement de la barrette pivotante 51, au micromètre prés.

Un ressort 62 de rattrapage des jeux fonctionnels du dispositif est agencé entre la barrette pivotante 51 et le support 52 : il permet ainsi d'avoir un appui permanent entre la vis 61 et la barrette 51 en position pivotée.

Tel que représenté, le guide de sortie 5 a une forme géométrique et une longueur adaptées pour limiter le nombre de pastilles rectifiées en tampon et leur vitesse en sortie. On évite ainsi le basculement desdites pastilles P sur le système de convoyage en aval de la rectifieuse sans centre 10.

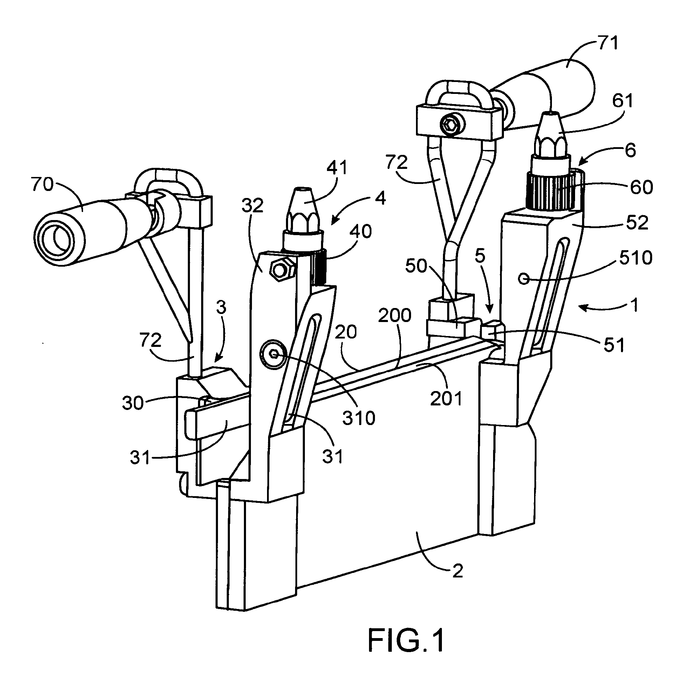

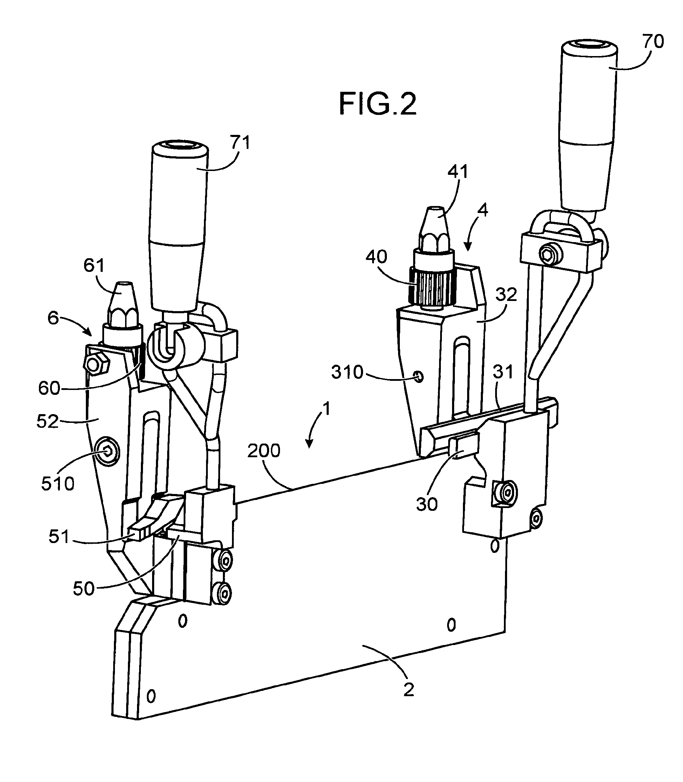

Tel qu'illustré en figures 1 et 2, le dispositif selon l'invention 1 constitue un ensemble monobloc auquel sont fixées des poignées (pivotantes) 70, 71 adaptées pour permettre son insertion et son retrait d'une rectifieuse sans centre 10. Cela permet de faciliter les opérations de maintenance, contraignantes en environnement de boîte à gants. L'ensemble 1 est monobloc car :
■ les tourelles 32, 52 dans lesquelles sont montées les barrettes pivotantes 31, 51 avec les moyens de réglage 4, 6 et
■ les supports 72 des poignées 70, 71 auxquels sont fixées les barrettes fixes 30, 50 sont fixés par vissage à la règle d'enfilade elle-même monobloc.

Bien que décrit en référence à l'application dans une rectifieuse sans centre dans laquelle le dispositif a pour fonctions l'introduction, le guidage et l'évacuation des pastilles de combustible nucléaire dans une rectifieuse sans centre, on peut envisager toutes applications qui nécessitent une introduction, un guidage et une évacuation de pièces cylindriques avec une très grande précision pour éviter toute dérive de pièces.

## Revendications

1. Dispositif (1) pour l'introduction, le guidage et l'évacuation de pièces cylindriques, telles que des pastilles (P) de combustible nucléaire, dans une rectifieuse sans centre (10), comprenant :
- une règle d'enfilade (2) adaptée pour permettre le guidage en enfilade desdites pièces cylindriques sur la longueur des meules de travail (8) et d'entraînement d'une rectifieuse sans centre,
- un premier guide (3, 30, 31), dit guide d'entrée, agencé à une extrémité longitudinale de la règle d'enfilade et adapté pour permettre l'introduction en enfilade des pièces cylindriques sur la règle depuis un système de convoyage en amont de la rectifieuse sans centre,
- des moyens mécaniques (4, 40, 41) de réglage micrométrique de l'alignement du guide d'entrée par rapport à la règle d'enfilade,
- un deuxième guide (5, 50, 51), dit guide de sortie, agencé à l'autre extrémité longitudinale de la règle d'enfilade et adapté pour permettre le transfert des pièces depuis la règle vers un système de convoyage en aval de la rectifieuse sans centre,
- des moyens mécaniques (6, 60, 61) de réglage micrométrique de l'alignement du guide de sortie par rapport à la règle d'enfilade.
dans lequel les moyens mécaniques (4, 40, 41) de réglage micrométrique de l'alignement du guide d'entrée sont indépendants de ceux micrométrique de l'alignement du guide de sortie.

2. Dispositif (1) selon la revendication 1, dans lequel la règle d'enfilade (2) est une pièce monobloc en acier XC 38 ayant subi des traitements thermiques de revenu et de trempe en surface et à coeur et de préférence des traitements de surface une fois la règle (2) finie.

3. Dispositif (1) selon la revendication 1 ou 2, dans lequel au moins l'un des deux guides est constitué de deux barrettes (30, 31 ; 50, 51) dont une (30 ;50) fixe et parallèle sur un bord longitudinal (200) de la règle et l'autre (31 ; 51) est montée sur un pivot qui permet de régler l'écartement par rapport au guide fixe en vis-à-vis, l'écartement du guide pivotant étant réalisé par l'actionnement des moyens mécaniques de réglage de l'alignement dudit guide.

4. Dispositif (1) selon la revendication 3, dans lequel le guide d'entrée et le guide de sortie sont constitués chacun de deux barrettes dont une fixe et parallèle à un bord longitudinal de la règle et l'autre est montée pivotante pour ajuster l'écartement du guide avec le guide fixe en vis à vis.

5. Dispositif (1) selon l'une des revendications 3 ou 4, dans lequel la barrette pivotante (31 ; 51) des deux guides est montée pivotante sur un axe (310 ; 510) muni d'un palier en polymère.

6. Dispositif (1) selon l'une des revendications 4 à 5, dans lequel :
- l'axe (310 ; 510) de pivotement de la barrette pivotante du guide d'entrée et/ou de sortie est (sont) monté(s) dans un support (32 ; 52),
- les moyens mécaniques (4, 40, 41) de réglage micrométrique de l'alignement du guide d'entrée par rapport à la règle d'enfilade et/ou ceux (6, 60, 61) de réglage du guide de sortie comprennent une première vis (40 ; 60) vissée dans le support de l'axe de pivotement et une deuxième vis (41 ; 61) imbriquée dans la première vis, de moindre pas que celle-ci et adaptée pour venir en appui contre une partie de la barrette pivotante, un vissage de la première vis dans le support provoquant une translation des deux tandis qu'un vissage de la deuxième vis dans la première vis et en appui contre la partie de la barrette pivotante provoque un pivotement de cette dernière.

7. Dispositif (1) selon la revendication 6, dans lequel le pas de la deuxième vis (41 ; 61) est inférieur tout en ayant une valeur suffisamment proche du pas de la première vis (40, 60) pour engendrer un réglage micrométrique des barrettes pivotantes.

8. Dispositif (1) selon la revendication 6 ou 7, comprenant un ressort (42 ; 62) adapté pour rattraper les jeux fonctionnels du dispositif garantissant l'appui permanent entre la deuxième vis (41 ; 61) et la barrette pivotante (31 ; 51).

9. Dispositif (1) selon l'une des revendications 7 ou 8, dans lequel chaque support (32 ; 52) d'axe de pivotement et de vis est fixé à la règle d'enfilade.

10. Dispositif (1) selon l'une des revendications 7 à 9, dans lequel dans lequel chaque support (32 ; 52) d'axe de pivotement et de vis est conformé en tourelle avec les deux vis imbriquées l'une dans l'autre et agencées en partie supérieure de tourelle.

11. Dispositif (1) selon l'une des revendications précédentes, dans lequel la forme géométrique et la longueur du guide de sortie (5) sont adaptées pour limiter le nombre de pièces cylindriques rectifiées en tampon en sortie des meules.

12. Dispositif (1) selon l'une des revendications précédentes, constituant un ensemble monobloc auquel sont fixées des poignées (70 ; 71) adaptées pour permettre son insertion et son retrait d'une rectifieuse sans centre (10).

13. Rectifieuse sans centre (10), comprenant un dispositif selon l'une des revendications précédentes.

14. Rectifieuse sans centre selon la revendication 13, adaptée à la rectification de pastilles (P) de combustible nucléaire.

15. Boite à gants dans laquelle est agencée une rectifieuse sans centre selon l'une des revendications 13 ou 14.

## Patentansprüche

1. Einrichtung (1) zum Einsetzen, Führen und Herausnehmen zylindrischer Teile, beispielsweise Nuklearbrennstoff-Tabletten (P), in eine spitzenlose Schleifmaschine (10), umfassend:
- ein Aneinanderreihung-Führungselement (2), das dazu angepasst ist, die Führung der zylindrischen Teile in Aneinanderreihung über die Länge der Schleifbearbeitungs- (8) und Antriebsscheiben einer spitzenlosen Schleifmaschine zu erlauben,
- eine erste, als Eintrittsführung bezeichnete Führung (3, 30, 31), die an einem Längsende des Aneinanderreihung-Führungselements angeordnet und dazu ausgebildet ist, das Einsetzen der zylindrischen Teile in Aneinanderreihung auf dem Aneinanderreihung-Führungselement von einem Fördersystem vor der spitzenlosen Schleifmaschine aus zu erlauben,
- mechanische Mittel (4, 40, 41) zur mikrometrisch genauen Feineinstellung der Ausrichtung der Eintrittsführung in Bezug auf das Aneinanderreihung-Führungselement,
- eine zweite, als Austrittsführung bezeichnete Führung (5, 50, 51), die an dem anderen Längsende des Aneinanderreihung-Führungselements angeordnet und dazu ausgebildet ist, den Transport der Teile von dem Führungselement aus zu einem Fördersystem hinter der spitzenlosen Schleifmaschine zu erlauben,
- mechanische Mittel (6, 60, 61) zur mikrometrisch genauen Feineinstellung der Ausrichtung der Austrittsführung in Bezug auf das Aneinanderreihung-Führungselement,
wobei die mechanischen Mittel (4, 40, 41) zur mikrometrisch genauen Feineinstellung der Ausrichtung der Eintrittsführung unabhängig von denjenigen zur mikrometrisch genauen Feineinstellung der Ausrichtung der Austrittsführung sind.

2. Einrichtung (1) nach Anspruch 1, wobei das Aneinanderreihung-Führungselement (2) ein Monoblock-Teil aus XC-38-Stahl ist, das Wärmebehandlungen zum Anlassen und Härten an der Oberfläche und am Kern ausgesetzt wurde, und bevorzugt Oberflächen-Behandlungen an dem fertigen Führungselement (2).

3. Einrichtung (1) nach Anspruch 1 oder 2, wobei wenigstens eine der zwei Führungen aus zwei Leisten (30, 31; 50, 51) gebildet ist, von denen eine (30; 50) fest und parallel an einem Längsrand (200) von dem Führungselement angeordnet ist, und die andere (31; 51) an einem Drehzapfen montiert ist, was es erlaubt, den Abstand in Bezug auf die feste Führung gegenüber zu regulieren, wobei der Abstand der schwenkbaren Führung durch Betätigung der mechanischen Mittel zur Einstellung der Ausrichtung der Führung eingestellt wird.

4. Einrichtung (1) nach Anspruch 3, wobei die Eintrittsführung und die Austrittsführung jeweils aus zwei Leisten gebildet sind, von denen die eine fest und parallel zu einem Längsrand des Führungselements angeordnet ist, und die andere schwenkbar montiert ist, um den Abstand der Führung zu der festen Führung gegenüber einzustellen.

5. Einrichtung (1) nach einem der Ansprüche 3 oder 4, wobei die schwenkbare Leiste (31; 51) der zwei Führungen schwenkbar an einer Achse (310; 510) montiert ist, die mit einem Polymer-Lager ausgestattet ist.

6. Einrichtung (1) nach einem der Ansprüche 4 bis 5, wobei:
- die Schwenkachse (310; 510) der schwenkbaren Leiste der Eintrittsführung oder/und der Austrittsführung in einer Halterung (32; 52) montiert ist (sind),
- die mechanischen Mittel (4, 40, 41) zur mikrometrisch genauen Feineinstellung der Ausrichtung der Eintrittsführung in Bezug zum Aneinanderreihung-Führungselement, oder/und diejenigen (6, 60, 61) zur Einstellung der Austrittsführung eine erste Schraube (40; 60) umfassen, die in die Halterung der Schwenkachse geschraubt ist, und eine zweite Schraube (41; 61) umfassen, die in die erste Schraube eingebettet ist, mit geringerer Gewindesteigung als diese und dazu ausgebildet, in Anlage an ein Teil der schwenkbaren Leiste zu kommen, wobei ein Einschrauben der ersten Schraube in die Halterung eine Verschiebung der beiden hervorruft, während ein Einschrauben der zweiten Schraube in die erste Schraube und in Anlage an dem Teil der schwenkbaren Leiste eine Schwenkbewegung der Letzteren hervorruft.

7. Einrichtung (1) nach Anspruch 6, wobei die Gewindesteigung der zweiten Schraube (41; 61) kleiner ist, aber einen Wert hinreichend nah an der Gewindesteigung der ersten Schraube (40, 60) aufweist, um eine mikrometrisch genaue Feineinstellung der schwenkbaren Leisten hervorzubringen.

8. Einrichtung (1) nach Anspruch 6 oder 7, umfassend eine Feder (42; 62), die dazu angepasst ist, die funktionellen Spiele der Einrichtung aufzufangen, was die permanente Anlage zwischen der zweiten Schraube (41; 61) und der schwenkbaren Leiste (31; 51) garantiert.

9. Einrichtung (1) nach einem der Ansprüche 7 oder 8, wobei jede Halterung (32; 52) der Schwenkachse und der Schrauben an dem Aneinanderreihung-Führungselement fixiert ist.

10. Einrichtung (1) nach einem der Ansprüche 7 bis 9, wobei jede Halterung (31; 52) der Schwenkachse und der Schrauben turmförmig ausgebildet ist, wobei die zwei Schrauben ineinander eingebettet und in einem oberen Teil des Turms angeordnet sind.

11. Einrichtung (1) nach einem der vorhergehenden Ansprüche, wobei die geometrische Form und die Länge der Austrittsführung (5) dazu angepasst sind, die Anzahl der geschliffenen zylindrischen Teile in einem Puffer am Ausgang der Schleifscheiben zu limitieren.

12. Einrichtung (1) nach einem der vorhergehenden Ansprüche, welche eine Monoblock-Anordnung bildet, an welcher Griffe (70; 71) befestigt sind, die dazu angepasst sind, zu ermöglichen, dass sie in eine spitzenlose Schleifmaschine (10) eingesetzt und aus dieser herausgenommen werden kann.

13. Spitzenlose Schleifmaschine (10), umfassend eine Einrichtung nach einem der vorhergehenden Ansprüche.

14. Spitzenlose Schleifmaschine nach Anspruch 13, angepasst zum Schleifen von Nuklearbrennstoff-Tabletten (P).

15. Handschuhkasten, in welchem eine spitzenlose Schleifmaschine nach einem der Ansprüche 13 oder 14 angeordnet ist.

## Claims

1. Device (1) for the insertion, guidance and evacuation of cylindrical parts such as nuclear fuel pellets (P), in a centreless grinder (10), comprising:
- an insertion guide chute (2) adapted to guide said cylindrical parts over the length of the grinding wheel (8) and drive wheel of a centreless grinder,
- a first guide (3, 30, 31), called the entry guide, arranged at one longitudinal end of the guide chute and adapted to allow the insertion of cylindrical parts one by one onto the guide chute from a conveyor system on the entry side of the centreless grinder,
- mechanical means (4, 40, 41) for micrometric adjustment of the entry guide relative to the guide chute,
- a second guide (5, 50, 51), called the exit guide, arranged at the other longitudinal end of the guide chute and adapted to transfer parts from the chute to a conveyor system on the exit side from the centreless grinder,
- mechanical means (6, 60, 61) for micrometric adjustment of the alignment of the exit guide relative to the guide chute,
in which the mechanical means (4, 40, 41) for micrometric adjustment of the alignment of the entry guide are independent from the means for micrometric adjustment of the alignment of the exit guide.

2. Device (1) according to claim 1, in which the guide chute (2) is a single piece part made of XC 38 steel, on which surface and in-core annealing and quenching heat treatments have been made and preferably surface treatments once the guide chute (2) has been finished.

3. Device (1) according to claim 1 or 2, in which at least one of the two guides is composed of two strips (30, 31, 50, 51) one of which (30, 50) is fixed and parallel to the longitudinal edge (200) of the chute and the other (31, 51) is installed on a pivot that adjusts the space from the fixed guide facing it, the distance from the pivoting guide being varied by actuation of mechanical means for adjusting the alignment of said guide.

4. Device (1) according to claim 3, in which the entry guide and the exit guide are each composed of two strips, one of which is fixed and parallel to a longitudinal edge of the chute and the other is free to pivot to adjust the spacing of the guide from the fixed guide facing it.

5. Device (1) according to one of claims 3 or 4, in which the pivoting strip (31, 51) of the two guides is installed pivoting about an axis (310, 510) fitted with a polymer bearing.

6. Device (1) according to either claim 4 or 5, in which:
- the pivot axis (310, 510) of the pivoting strip of the entry guide and/or the exit guide is (are) mounted in a support (32, 52),
- the mechanical micrometric means (4, 40, 41) for adjustment of the alignment of the entry guide relative to the guide chute and/or the mechanical adjustment means (6, 60, 61) of the exit guide comprise a first screw (40, 60) screwed into the pivot axis support and a second screw (41, 61) nested into the first screw, with a smaller pitch than the first screw and adapted to bear in contact with a part of the pivoting strip, screwing of the first screw into the support causing translation of the two screws while screwing the second screw into the first screw and bearing in contact with the part of the pivoting strip causes pivoting of the pivoting strip.

7. Device (1) according to claim 6, in which the pitch of the second screw (41, 61) is smaller than but sufficiently close to the pitch of the first screw (40, 60) to create a micrometric adjustment of the pivoting strips.

8. Device (1) according to claim 6 or 7, comprising a spring (42, 62) adapted to compensate for functional clearances of the device by guaranteeing permanent bearing between the second screw (41, 61) and the pivoting strip (31, 51).

9. Device (1) according to claim 7 or 8, in which each pivot axis and screw axis support (32, 52) is fixed to the guide chute.

10. Device (1) according to one of claims 7 to 9, in which each pivot axis and screw axis support (32, 52) is shaped in a turret with the two screws nested in each other and arranged in the upper part of the turret.

11. Device (1) according to one of the previous claims, in which the geometric shape and the length of the exit guide (5) are adapted to limit the number of ground cylindrical parts buffered at the exit from the wheels.

12. Device (1) according to one of the previous claims, forming a single piece assembly to which adapted handles (70, 71) are fixed to enable its insertion into and removal from a centreless grinder (10).

13. Centreless grinder (10), comprising a device according to one of the previous claims.

14. Centreless grinder according to claim 13, adapted to grinding of nuclear fuel pellets (P).

15. Glove box in which a centreless grinder is arranged according to claim 13 or 14.
